# DEMANDE DE BREVET EUROPEEN

(11) **EP 0 807 586 A2**
(43) Date de publication de la demande: **19.11.1997**
(21) Numéro de dépôt: 97400572.0
(22) Date de dépôt: 14.03.1997
(51) Int. Cl.: B65D 71/00, B65D 19/42, B65D 19/22, B65D 19/38

(54) **Chariot de manutention à roulettes équipé de moyens pour le gerbage**

(30) Priorité: 15.05.1996 FR 9606108
(71) Demandeur: VALEO EQUIPEMENTS ELECTRIQUES MOTEUR, 94000 Créteil (FR)
(72) Inventeur: Godin, Bruno, 62780 Cucq (FR); Ray, Jacky, 62200 Boulogne sur Mer (FR); Hanquez, Christian, 62650 Zoteux (FR)
(74) Mandataire: Le Forestier, Eric

(57) **Abrégé**

Un chariot de manutention à roulettes (200) destiné à transporter une charge (300) est caractérisé en ce qu'il comprend un plateau inférieur (210) apte à recevoir la charge, ce chariot comportant une pluralité de roulettes (211) en saillie vers le bas et au moins un premier aménagement de calage (212) en saillie vers le bas jusqu'à un niveau situé au-dessus de la base des roulettes, et une coiffe (100) apte à être placée sur le dessus de la charge et comportant sur une face inférieure un second aménagement de calage (120) apte à coopérer avec la charge et sur une face supérieure au moins un logement (114a) apte à recevoir le premier aménagement (212) d'un autre chariot et, à distance du ou des logements, des espaces libres (130-132) pour recevoir les roulettes (211) dudit autre chariot.

## Description

La présente invention concerne un dispositif de gerbage de chariots de manutention à roulettes destinés à transporter des charges.

De tels chariots sont utilisés notamment dans les usines pour transporter des charges telles que par exemple des pièces de montage d'un poste de travail à un autre. Ils comprennent généralement un plateau monté sur roulettes, et transportent notamment des bacs dans lesquels sont placés des objets à transporter. Les bacs sont emboîtés les uns dans les autres pour former des piles sur le plateau du chariot. Les piles sont éventuellement sanglées au chariot pour les solidariser de celui-ci.

Dans certains cas, il peut être intéressant d'accrocher ensemble plusieurs chariots de manutention unitaires pour former un chariot de plus grande dimension et donc de plus grande capacité, ou bien pour les transporter d'un endroit à un autre.

Ainsi on entendra par "chariot de manutention" dans le présent mémoire, soit un chariot unitaire, soit une paire de chariots unitaires accrochés, soit plus généralement plusieurs chariots unitaires solidarisés.

En outre, et d'une façon plus générale, il peut être souhaitable de pouvoir transporter des charges d'un site à un autre, par exemple en camion ou en train, sous forme de lots empilés, ou gerbés, ceci simplifiant la manipulation des charges et permettant donc d'augmenter la sécurité et de diminuer les temps de manutention.

Ainsi le document US-A-5 016 761, par exemple, décrit des modules regroupant des produits et comportant des pieds autorisant, lors du gerbage, un calage mutuel des différents modules par complémentarité de formes avec le module sous-jacent.

Cette technique n'est toutefois nullement transposable au cas des chariots à roulettes. La première raison est que, les roulettes étant généralement à débattement libre autour d'un axe vertical et ne comportant aucune orientation imposée, leur engagement dans des logements complémentaires au sommet d'un chariot sous-jacent s'avèrerait extrêmement délicat à réaliser. La seconde raison tient en ce que, du fait du libre débattement précité et de la forme globalement irrégulière des roulettes et de leurs aménagements de montage, aucun calage efficace, c'est-à-dire aucune réelle complémentarité de formes, ne pourrait être réalisé.

La présente invention a donc pour premier objet de proposer un chariot de manutention qui, malgré la présence de roulettes en saillie vers le bas, soit gerbable avec une grande facilité et une stabilité satisfaisante.

Un autre objet de l'invention est d'éviter que les roulettes n'interviennent directement dans le calage d'un chariot supérieur sur un chariot inférieur, et de proposer des moyens de calage qui, bien que comportant des organes adjacents aux roulettes, n'entravent pas le roulement du chariot.

Ainsi l'invention propose un chariot de manutention tel que défini dans la revendication 1.

Des aspects préférés de ce chariot sont définis dans les sous-revendications.

La description qui va suivre, donnée à titre d'exemples non limitatifs et faite en référence aux dessins annexés, fera bien comprendre en quoi consiste l'invention et comment elle peut réalisée.

Sur les dessins :
la figure 1 est une vue en élévation de côté d'un chariot de manutention équipé d'une coiffe de gerbage selon l'invention,
la figure 2 est une vue en élévation de côté de deux chariots de la figure 1, équipés de coiffes et gerbés,
la figure 3 est une vue en élévation de côté de la coiffe illustrée sur les figures 1 et 2,
la figure 4 est une vue en élévation de face de la coiffe de la figure 3,
la figure 5 est une vue de dessus de la coiffe des figures 3 et 4,
la figure 6 est une vue en élévation de côté d'une coiffe de gerbage selon une variante de réalisation de l'invention,
la figure 7 est une vue en élévation de face de la coiffe de la figure 6, et
la figure 8 est une vue de dessus de la coiffe des figures 6 et 7.

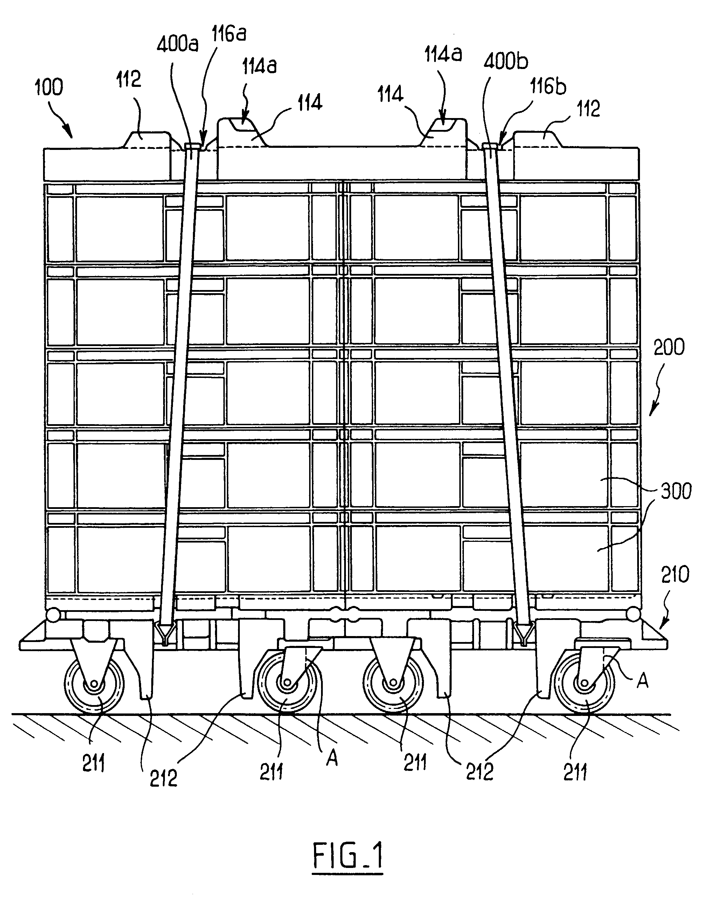

On a représenté sur la figure 1 un chariot de manutention à roulettes globalement désigné par la référence 200. Ce chariot comporte un plateau support inférieur 210 essentiellement rectangulaire et équipé sur sa face inférieure, dans le présent exemple, de quatre rangées de quatre roulettes 211 de type ordinaire. On observera ici que le chariot 200 est constitué par quatre chariots élémentaires à quatre roulettes chacun, fixés rigidement ensemble en deux rangées de deux par des moyens, non représentés, que l'homme du métier pourra réaliser sans difficulté.

De façon adjacente à chacune des roulettes 211 est prévu un pied de calage 212. Plus précisément, on trouve deux pieds de calage 212 entre les deux roulettes de gauche sur la figure, et deux autres pieds de calage entre les deux roulettes de droite.

Des pieds identiques sont prévus au niveau des trois autres rangées de quatre roulettes, non visibles.

On observera ici que, lorsque le chariot 200 repose sur le sol par ses roulettes 211, les pieds 212 ne sont pas en contact avec le sol, une distance par exemple de quelques centimètres étant laissée entre les extrémités inférieures des pieds et le sol. Ainsi les pieds n'entravent nullement le roulement du chariot. On observe également que les pieds 212 sont positionnés de telle sorte qu'ils n'entravent pas le libre débattement des roulettes autour de leur axe vertical A de montage sur le plateau 210.

Dans le présent exemple, le chariot 200 comporte une charge constituée par des piles juxtaposées de bacs 300 de contours parallélépipédiques, contenant par exemple des pièces détachées.

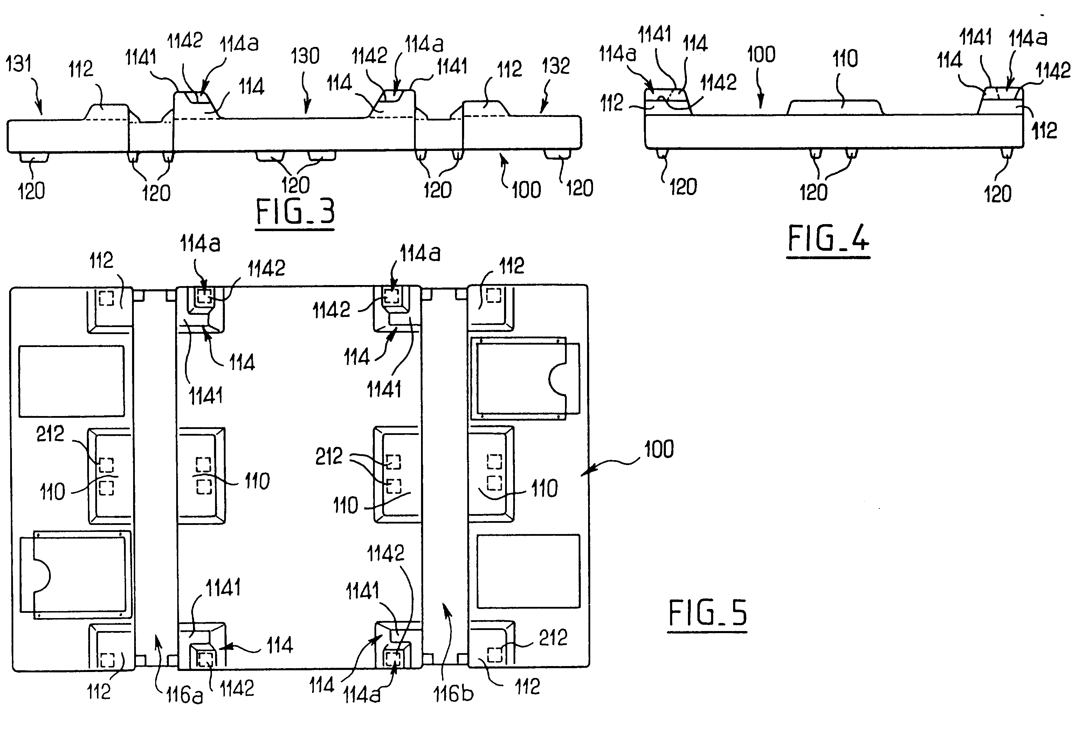

On a représenté sur les figures 1 à 5, et de façon particulièrement détaillée sur les figures 3 à 5, une coiffe 100 destinée à être positionnée et calée sur le dessus de la charge 300 du chariot, de façon à permettre le gerbage de plusieurs chariots identiques.

Cette coiffe 100 présente la forme générale d'une plaque réalisée par exemple en bois ou en matière plastique et possède des dimensions horizontales sensiblement égales à celles du plateau support 210 du chariot 200. Le coiffe est destinée à être positionnée et à reposer sur la charge portée par le chariot, et en l'espèce sur la couche supérieure de bacs 300.

Comme le montrent en détail les figures 3 à 5, la coiffe 100 porte sur sa face supérieure un ensemble de zones en saillie 110, 112, 114, et deux zones en creux 116a, 116b.

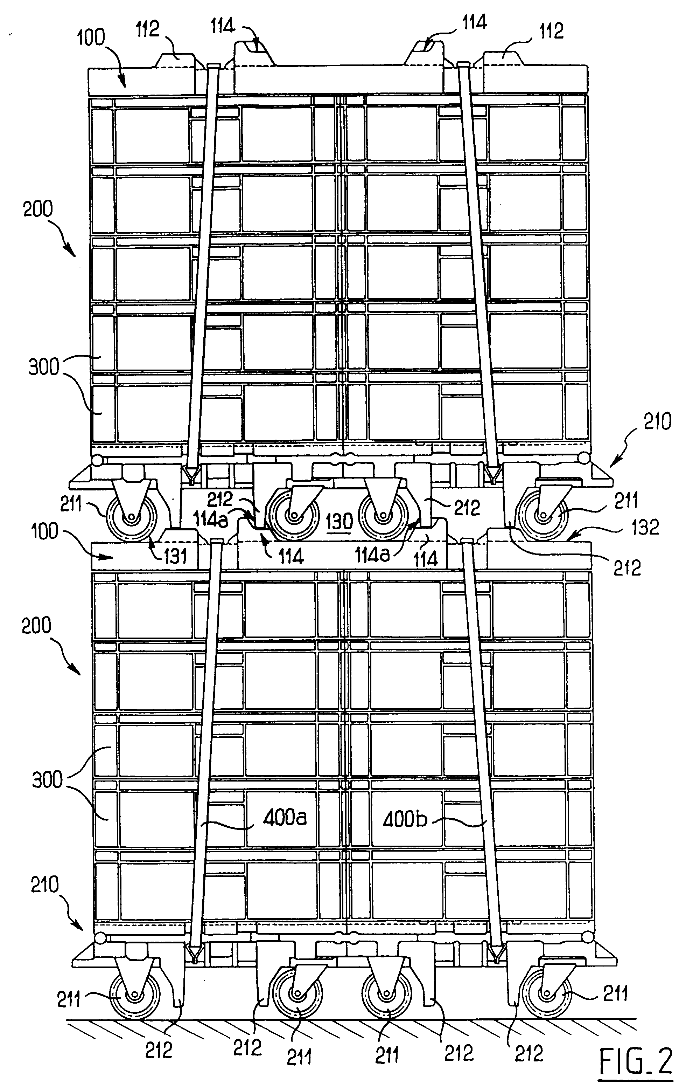

Les zones en creux 116a, 116b s'étendent parallèlement l'une à l'autre entre les deux grands côtés de la coiffe, et définissent des gorges destinées à loger deux sangles 400a, 400b de maintien des bacs 300 (voir figures 1 et 2), qui sont fixées par ailleurs au niveau du plateau support 210 du chariot.

Quatre zones en saillie 110 s'étendent à mi-chemin des deux gorges 116a, 116b, de part et d'autre de celles-ci.

Quatre zones en saillie 112, plus petites, s'étendent quant à elles du côté extérieur aux extrémités des deux gorges 116a, 116b, c'est-à-dire de façon adjacente aux deux grands bords de la coiffe 100.

Enfin quatre zones en saillie 114, sensiblement de la même taille que les zones 112, s'étendent en vis-à-vis desdites zones 112 par rapport aux gorges 116a, 116b.

Les zones 110, 112 ont sensiblement même hauteur par rapport au plan supérieur de la coiffe 100, tandis que les zones 114 ont une hauteur, par rapport à ce même plan, sensiblement deux fois plus grande.

On observe également que les zones les plus protubérantes 114 possèdent chacune dans un coin extérieur un évidement 114a tel que lesdites zones 114 possèdent une surface haute 1141 en forme générale de L et une surface basse 1142, correspondant à l'évidement 114a, placée en coin. La hauteur de chaque surface 1142 est identique à la hauteur de la surface supérieure des zones en saillie 110 et 112.

Par ailleurs, les emplacements et les dimensions des évidements 114a et des zones en saillie 110, 112 sont choisis de telle sorte que les seize pieds 212 d'un chariot sus-jacent s'appuient soit sur les surfaces des zones 110, 112, soit sur les surfaces de fond 1142 des évidements 114a. Les positions des seize pieds 212 sont illustrées par des carrés en tiretés sur la figure 5.

Par ailleurs, la coiffe 100 comporte sur sa surface inférieure des moyens pour son calage sur la charge du chariot de manutention inférieur. Ces moyens comprennent un ensemble de bossages 120 en saillie vers le bas et destinés, lorsque la coiffe est placée sur la charge, à pénétrer dans l'espace libre supérieur de la couche supérieure de bacs 300 au niveau des coins de ces bacs.

Dans le présent exemple, il est prévu des rangées de huit bossages 120 destinés à pénétrer, par paires voisines, dans les espaces supérieurs de quatre bacs 300 au niveau de leurs coins intérieurs.

Dans l'autre dimension, on prévoit avantageusement deux rangées de bossages 120 par bac.

De la sorte, ce réseau de bossages 120 permet d'une part de bloquer la coiffe par rapport à la charge vis-à-vis de toute translation horizontale, et d'autre part de contribuer avantageusement au blocage des bacs 300 en direction horizontale les uns par rapport aux autres.

La figure 2 illustre deux chariots selon l'invention, gerbés.

Grâce au positionnement des pieds 212 du chariot supérieur sur les aménagements de la coiffe 100 du chariot inférieur, et plus précisément grâce à la pénétration de quatre des pieds 212 dans les quatre logements définis par les évidements 114a, tandis que les autres pieds reposent au même niveau sur les zones en saillie 110, 112, on assure un calage tout à fait satisfaisant du chariot supérieur sur le chariot inférieur, toute translation horizontale étant interdite par les parties en "L" des zones 114 qui bordent les logements 114a.

On observe sur la figure 2 que les différentes zones en saillie 110, 112, 114 de la face supérieure de la coiffe 100 définissent entre elles des espaces libres, respectivement 120, 131, 132 qui, lors du gerbage, reçoivent les différentes roulettes 211.

On notera que, de façon préférée, les roulettes ne sont pas en contact avec les surfaces de ces espaces libres. En d'autres termes, la différence de hauteur entre les surfaces des zones 110, 110 et des évidements 114a et la surface de base de la coiffe est supérieure à la distance, mesurée verticalement, entre la base des roulettes 211 et la base des pieds 212.

On notera également que ces espaces libres sont suffisamment grands pour accueillir les roulettes 212 quelle que soit leur position angulaire.

De la sorte, la simple translation verticale vers le bas du chariot supérieur en direction de la coiffe prépositionnée du chariot inférieur suffit à assurer, par l'intermédiaire des pieds 212, un appui stable et un calage fiable du chariot supérieur.

On observera à cet égard que les formes légèrement obliques des parois qui délimitent les logements 114a assurent un guidage du chariot supérieur lors de cette opération.

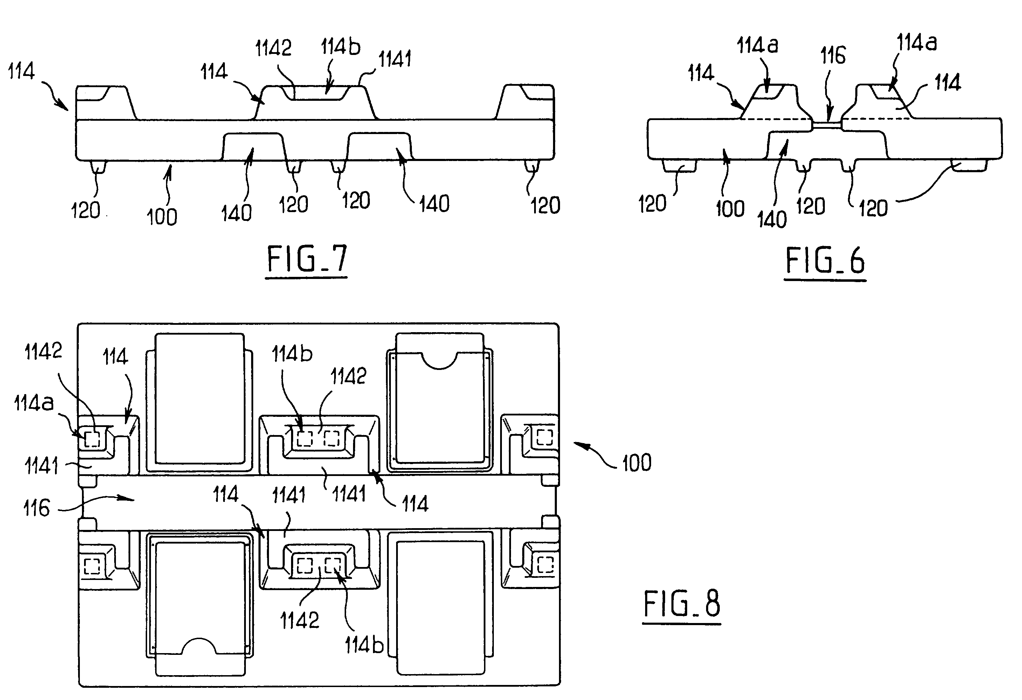

Les figures 6 à 8 illustrent une variante de réalisation de la coiffe selon l'invention, destinée à un groupe de deux chariots élémentaires.

On trouve ainsi sur la coiffe 100, outre les bossages inférieurs 120 de calage sur les bacs 300, six zones en saillie vers le haut 114, placées par paires de part et d'autre d'une gorge unique 116 pour sangle.

Quatre zones en saillie extrêmes 114 sont de forme identique à celle illustrée sur les figures 3 à 5, tandis que deux autres zones en saillie 114, placées à mi-chemin le long de la gorge 116, sont formées chacune par la réunion de deux zones 114 telles que décrites, en formant un renfoncement double 114b (c'est-à-dire pour deux pieds adjacents) délimité par une paroi saillante en forme générale de "U".

On trouve par ailleurs, sur la face inférieure de la coiffe, des zones évidées 140 de gain de poids.

Cette variante de la coiffe s'utilise de la même manière que dans le cas des figures 1 à 5, pour un chariot regroupant dans ce cas deux chariots élémentaires. Dans ce cas, chacun des pieds 212 du chariot sus-jacent est reçu dans un logement, respectivement 114a ou 114b, et participe donc au calage.

Bien entendu, la présente invention n'est nullement limitée aux modes de réalisation décrits et représentés, mais l'homme du métier saura y apporter toutes variantes et modifications entrant dans le cadre des revendications annexées.

## Revendications

1. Chariot de manutention à roulettes (200) destiné à transporter une charge (300), caractérisé en ce qu'il comprend un plateau inférieur (210) apte à recevoir la charge, ce chariot comportant une pluralité de roulettes (211) en saillie vers le bas et au moins un premier aménagement de calage (212) en saillie vers le bas jusqu'à un niveau situé au-dessus de la base des roulettes, et une coiffe (100) apte à être placée sur le dessus de la charge et comportant sur une face inférieure un second aménagement de calage (120) apte à coopérer avec la charge et sur une face supérieure au moins un logement (114a) apte à recevoir le premier aménagement (212) d'un autre chariot et, à distance du ou des logements, des espaces libres (130-132) pour recevoir les roulettes (211) dudit autre chariot.

2. Chariot selon la revendication 1, caractérisé en ce que les espaces libres (130-132) possèdent une profondeur telle que les roulettes (211) ne sont pas en contact avec leur fond.

3. Chariot selon l'une des revendications 1 et 2, caractérisé en ce que ledit premier aménagement comprend une pluralité de pieds individuels (212) et en ce que la coiffe possède sur sa face inférieure une pluralité de logements (114a) pour lesdits pieds.

4. Chariot selon la revendication 3, caractérisé en ce qu'il est prévu un pied (212) à proximité de chaque roulette (211).

5. Chariot selon l'une des revendications 3 et 4, caractérisé en ce que la face supérieure de la coiffe comporte des bossages (114) dans lesquels sont formés des évidements (114a; 114b) définissant des logements pour au moins une partie des pieds (212).

6. Chariot selon la revendication 5, caractérisé en ce que la face supérieure de la coiffe comporte d'autres bossages (110, 112) possédant des surfaces supérieures essentiellement planes, définissant des surfaces d'appui sans calage pour d'autres pieds (212).

7. Chariot selon l'une des revendications 5 et 6, caractérisé en ce que lesdits premiers bossages (114) sont de forme essentiellement carrée et possèdent des évidements (114a) dans une région de coin de ceux-ci.

8. Chariot selon la revendication 7, caractérisé en ce qu'il est prévu quatre premiers bossages (114) placés aux quatre coins d'un rectangle, et en ce que lesdits évidements (114a) sont formés dans les régions de coin desdits bossages situés du côté extérieur par rapport à ce rectangle.

9. Chariot selon l'une des revendications 3 à 8, caractérisé en ce que les pieds (212) sont agencés par paires, les pieds d'une même paire s'appuyant sur la coiffe (100) de part et d'autre d'une gorge (116a, 116b; 116) formée dans la surface supérieure de la coiffe pour recevoir une sangle de maintien (400a, 400b).

10. Chariot selon l'une des revendications 3 à 9, caractérisé en ce que lesdits espaces libres comprennent des premiers espaces libres (130) situés entre deux logements adjacents et des seconds espaces libres (131, 132) situés entre un logement et un bord de la coiffe, et en ce que les pieds (212), dans une direction horizontale, sont prévus seulement entre des roulettes adjacentes (211).

11. Chariot selon l'une des revendications 1 à 10, caractérisé en ce que la charge du chariot est constituée par une pluralité d'empilages de bacs rectangulaires (300) et en ce que les seconds aménagements de calage sont constitués par des bossages (120) aptes à s'engager dans au moins une partie des bacs de la couche supérieure dans la région des coins intérieurs desdits bacs.
